# EUROPÄISCHE PATENTSCHRIFT

(11) **EP 1 366 450 B1**
(45) Veröffentlichungstag und Bekanntmachung des Hinweises auf die Patenterteilung: **12.07.2006**
(21) Anmeldenummer: 02708285.8
(22) Anmeldetag: 15.01.2002
(51) Int. Cl.: G06Q 30/00

(54) **SYSTEM ZUM VERKAUF PREPAID-PRODUKTEN**
SYSTEM FOR VENDING PREPAID PRODUCTS
SYSTEME DE VENTE DE PRODUITS PREPAYES

(30) Priorität: 15.01.2001 DE 10101728
(43) Veröffentlichungstag der Anmeldung: 03.12.2003
(73) Patentinhaber: alphyra GmbH, 54290 Trier (DE)
(72) Erfinder: Schneider, Matthias, 54310 Ralingen-Godendorf (DE); Premm, Rüdiger, 54296 Trier (DE)
(74) Vertreter: KEIL & SCHAAFHAUSEN Patentanwälte
(86) Internationale Anmeldenummer: PCT/EP2002/000333
(87) Internationale Veröffentlichungsnummer: WO 2002/056211

(56) Entgegenhaltungen:
- WO-A-96/38801
- WO-A-98/01815
- WO-A-99/62038

## Beschreibung

Die Erfindung betrifft ein System zum Verkauf von Prepaid-Produkten mit einer zentralen Datenbank und mindestens einer einen Datenspeicher aufweisenden Verkaufseinrichtung, die über eine Telekommunikationsverbindung miteinander verbindbar sind.

Derartige Systeme werden bspw. im Mobilfunkbereich benötigt, um Prepaid-Karten für Mobiltelefone wieder aufladen zu können. Aus der DE 200 11 602 U1 ist ein Ladeterminal für Vorausbezahl-Karten, insbesondere Telefon-Karten für tragbare Telefone mit Vorausbezahlung bekannt, die einen Einzahlungsautomaten, einen Steuerrechner und ein Modem zur direkten Verbindung mit dem Karten-Dienstleister aufweisen, der gegen Zahlungsnachweis die mit der Zahlung verlangte Dienstleistung unmittelbar freischaltet. Dieses Verfahren sichert den Karten-Dienstleister zwar davor, dass seine Dienstleistung ohne entsprechende Bezahlung freigeschaltet wird. Es ist jedoch für Dienstleister und Kunden aufwendig, wenn nach der Bezahlung eine Verbindung mit dem Karten-Dienstleister nicht zustande kommt. In diesem Fall wird ein bestimmter Code erzeugt, den der Kunde dem Karten-Dienstleister dann mitteilen muss, damit die Dienstleistung freigeschaltet wird. Dies ist für den Karten-Dienstleister mit einem hohen verwaltungstechnischen Aufwand verbunden. Zudem besteht die Gefahr von Manipulationen an den erzeugten Codes.

Ferner sind im Handel allgemein Verkaufsautomaten bekannt, die Plastik- oder Pappkärtchen mit aufgedruckten Pin-Codes zum Aufladen der Mobiltelefone gegen Bezahlung ausgeben. Diese Plastikkärtchen müssen mit einem großen logistischen und personellen Aufwand an die verschiedenen Verkaufsautomaten des Einzelhandels verteilt werden. Außerdem müssen in den Verkaufsautomaten stets eine größere Menge von Karten mit Pin-Codes bevorratet sein, damit die Kunden nicht zu häufig vor leeren Verkaufsautomaten stehen. Damit wächst aber die Gefahr von Diebstählen und Automatenaufbrüchen. Außerdem muss der Einzelhändler die Karten lange vorfinanzieren, wodurch für ihn totes Kapital entsteht.

Aus der WO 98/01815 A1 ist ein Verkaufssystem für Prepaid-Karten mit einem Terminal bekannt, in dessen Speicher mehrere PIN-Nummern für den Verkauf gespeichert werden können. Dazu wird das an einem Point-of-Sale angeordnete Verkaufsterminal mit einem Host-Rechner verbunden, um mehrere PIN-Nummern in den Speicher des Terminals zu laden und beim Verkauf einer PIN-Nummer bspw. auf eine Karte auszudrucken. Das Laden der PIN-Nummern von dem Host-Rechner kann in einem verschlüsselten Datenformat erfolgen.

Aufgabe der Erfindung ist es, ein System der Eingangs genannten Art vorzuschlagen, das in der Handhabung einfach und sicher ist und als einheitliche zentrale Verkaufsplattform zur Unterstützung des elektronischen Verkaufs über Automaten und Kassensysteme eingesetzt werden kann.

Diese Aufgabe wird erfindungsgemäß mit den Merkmalen des Anspruchs 1 gelöst. Dabei sind die Prepaid-Produkte als Codewörter in der zentralen Datenbank gespeichert und werden über die Telekommunikationsverbindung in den Datenspeicher der Verkaufseinrichtung übertragen, wobei die Codewörter bei der Übertragung zu Datenpaketen mit einer vorgebbaren, vorzugsweise kleinen Anzahl von Codewörtern zusammengefasst sind. Die Verkaufseinrichtung gibt bei einem Verkauf ein Codewort an den Kunden bspw. durch Drucken eines Papier-Tickets aus und meldet nach einem oder mehreren Verkäufen die Anzahl der verkauften Codewörter an die zentrale Datenbank zurück. Die zentrale Datenbank überwacht die Anzahl der in der Verkaufseinrichtung jeweils noch vorhandenen Codewörter und überträgt bei Unterschreiten einer vorgebbaren Anzahl ein neues Datenpaket mit neuen Codewörtern.

Dieses System ermöglicht ein Verfahren zum Empfangen und Verteilen von Prepaid-Codewörtem, insbesondere Nummerncodes, die für einen Verkauf "Just-in-Time" an den Point of Sale übertragen werden. Für die Netzbetreiber von Mobilfunknetzen entfallen damit die Herstellungs- und Vertriebskosten für die Prepaid-Karten, die mit Pin-Codes (Codenummern) bedruckt und verpackt werden mussten. Es entstehen keine Lieferengpässe und das Produkt liegt schnell beim Kunden vor. Zusätzlich fallen Logistik- und Versicherungskosten weg, da die Karten mit den Codenummern nicht mehr verteilt werden müssen und nicht mehr gestohlen werden können. Die Verteilung der Prepaid-Produkte erfolgt statt dessen durch unmittelbare Datenkommunikation von der zentralen Datenbank direkt zu den Verkaufseinrichtungen. Sowohl größere Handelsketten als auch der Einzelhandel müssen Prepaid-Produkte nicht mehr vorfinanzieren und können ihre Kunden jederzeit mit den entsprechenden Nummerncodes oder dgl. Codewörtern versorgen. Daher muss sich auch der Endkunde nicht mehr um die rechtzeitige Bestellung von Karten bemühen. Zudem wird das Produktangebot flexibler, indem bspw. keine Mindestabnahme von Prepaid-Produkten mehr vorgeschrieben oder die Preisstaffelung erweitert wird. Dabei kann der Kunde trotz der direkten Kommunikationsverbindung anonym bleiben, da er nach wie vor bspw. durch Barverkauf zahlen kann.

Insbesondere hat es sich als vorteilhaft erwiesen, wenn die zentrale Datenbank ein Codewort nicht erst auf Anfrage von einer Verkaufseinrichtung übersendet, sondern jeweils eine kleine Anzahl von bspw. fünf Codewörtern zu Datenpaketen zusammenfasst, die in einem lokalen Datenspeicher der Verkaufseinrichtung bevorratet sind. Dann muss der Kunde beim Kauf nicht auf den Aufbau einer Kommunikationsverbindung warten, bevor er den Nummerncode erhält. Wenn in einer Verkaufseinrichtung keine Codewörter für ein bestimmtes Prepaid-Produkt mehr vorhanden sind, passt sich das Verkaufsmenu automatisch so an, dass für dieses Produkt kein Verkauf mehr möglich ist. Trotz der Bevorratung von Codewörtern ist das finanzielle Risiko bei Manipulationen der Verkaufseinrichtungen aufgrund der kleinen Anzahl nur gering.

Als Herzstück des Systems verwaltet die zentrale Datenbank dabei den Produktstand aller angeschlossenen Verkaufseinrichtungen vollautomatisch, so dass eine Wartung des Systems während des normalen Betriebs nicht notwendig ist.

Zur Versorgung der zentralen Datenbank mit Codewörtern ist die zentrale Datenbank erfindungsgemäß über eine Kommunikationsverbindung mit mindestens einem Codewörter-Provider, bspw. einem Mobilfunk-Netzanbieter, verbindbar, der Codewörter ggf. verschlüsselt und/oder mit einer digitalen Signatur an die zentrale Datenbank überträgt. Damit kann der Bestand an in der Datenbank gespeicherten Codewörtern schnell und flexibel an den tatsächlichen Abverkauf angepasst werden, so dass auch der Betreiber der Datenbank keine hohe Kapitalbindung durch eine große Bevorratung vom Prepaid-Codewörtern aufwenden muss.

Erfindungsgemäß weist die zentrale Datenbank dafür eine an das Datenformat der Codewörter-Provider anpassbare Einspeiseeinrichtung zum Empfang der Codewörter auf. Durch diese insbesondere frei konfigurierbar ausgestaltete Einspeiseeinrichtung kann die zentrale Datenbank sämtliche von den Netzwerkbetreibern angelieferten Codewörter-Datenformate empfangen. Um eine einheitliche Datenstruktur und -verwaltung zu ermöglichen, ist vorgesehen, dass die zentrale Datenbank eine Vor-Formatiereinrichtung aufweist, in der verschiedene Datenformate unterschiedlicher Codewörter-Provider in ein einheitliches Systemformat konvertiert und verschlüsselt werden.

Ein besonders hoher Sicherheitsstandard wird erfindungsgemäß erreicht, indem die Codewörter in der zentralen Datenbank verschlüsselt abgelegt und die zu Datenpaketen zusammengefassten Codewörter beim Versenden an die Verkaufseinrichtung verschlüsselt gesendet werden. Dabei werden die Datenpakete mehrfach verschlüsselt, so dass eine Art Doppel-Tresor-System mit einer ersten Verschlüsselung bei der Datenanlieferung und einer zweiten Verschlüsselung beim Datenversand entsteht.

Um eine einfache und reibungslose Kommunikation zwischen der zentralen Datenbank und einer oder mehreren Verkaufseinrichtungen zu ermöglichen, weist die zentrale Datenbank ein Kommunikationsmodul auf, das eine geeignete Telekommunikationsverbindung zu der jeweiligen Verkaufseinrichtung auswählt, zu übertragende Daten in ein für die jeweilige Verkaufseinrichtung und/oder die ausgewählte Kommunikationsverbindung geeignetes Datenformat konvertiert und zu empfangende Daten in ein für die zentrale Datenbank geeignetes Datenformat zurückkonvertiert. So kann die zentrale Datenbank völlig unterschiedliche elektronische Verkaufseinrichtungen, wie Warenautomaten, Pin-Terminals, Bankautomaten, Internet-Seiten für den E-Commerce und dgl. ansprechen. Dafür stehen je nach Verkaufseinrichtung verschiedene Kommunikationskanäle offen. Diese können ISDN-Festnetzverbindungen, GSM-Daten oder GSM-SMS, GPRS, Internet oder dgl. sein. Durch Erweiterungen des Kommunikationsmoduls lassen sich auch neue Kommunikationstechniken, wie bspw. UMTS, einfach in das System integrieren. Derartige Erweiterungen können besonders einfach durch Programmaktualisierungen vorgenommen werden, wenn die Kommunikationsmodule alle gängigen Kommunikationsschnittstellen aufweisen und durch Computerprogramme konfigurierbar sind.

Außerdem können die Verkaufseinrichtungen gleichzeitig über mehrere verschiedene Kommunikationseinrichtungen verfügen, um bei Störungen eines Kommunikationssystems automatisch auf ein anderes Kommunikationssystem ausweichen zu können. Ein bspw. von einem Kassierer zu bedienendes Pin-Terminal kann gleichzeitig einen Internetanschluss und über den Telefonanschluss des Geschäfts einen direkten ISDN-Festnetzanschluss aufweisen. Bei an öffentlich zugänglichen Stellen aufgestellten Verkaufsautomaten können besonders einfach verschiedene Mobilfunknetze auswählbar sein. Durch Verwendung dieses flexiblen Kommunikationsmoduls kann das gesamte System somit schnell und kostengünstig in jedem Land der Erde und in jegliche bestehende Kommunikations-Infrastruktur integriert werden.

Weitere Flexibilität kann beim Nachrüsten bestehender Verkaufseinrichtungen erfindungsgemäß durch ein Hardware-Adapter erreicht werden, das zur Kommunikation mit der zentralen Datenbank und zur Speicherung und Verarbeitung der Codewörter in der Verkaufseinrichtung vorgesehen ist. Ein solches Hardware-Adapter ist bspw. als Platine mit vorzugsweise standardisierten Schnittstellen ausgebildet, die sich unmittelbar an bestehende Verkaufseinrichtungen anschließen lassen. Sie können ferner einen Prozessor mit Datenspeicher zur autarken Verarbeitung und Speicherung der empfangenen Daten und ggf. ein geeignetes Kommunikationsmodem aufweisen. Dann kann eine Verkaufseinrichtung bspw. gleichzeitig für das erfindungsgemäße Verkaufssystem und als PIN-Terminal für Scheck- oder Kreditkartenbezahlung verwendet werden.

Die Verschlüsselung basiert in einer besonders vorteilhaften Technik sowohl auf asymmetrischen als auch symmetrischen Verschlüsselungsverfahren. Eine Entschlüsselung der Codewörter findet erst in der Verkaufseinrichtung selbst statt.

Wenn für die Übertragung von Datenpaketen für verschiedene Prepaid-Produkte sowie von und zu verschiedenen Verkaufseinrichtungen ein einheitlichen Datenprotokoll verwendet wird, das zumindest eine Kennung für die Verkaufseinrichtung, ggf. eine Kennung für das Prepaid-Produkt und eine dem Codewort zugeordnete eindeutige Vorgangskennung aufweist, lässt sich das erfindungsgemäße System in jedem Land der Erde installieren, in dem es bspw. Mobilfunk oder sonstige paketorientierte Trägerdienste gibt. Außerdem können so in einer Verkaufseinrichtung prinzipiell eine unbegrenzte Anzahl verschiedener Prepaid-Produkte vertrieben werden. Die dafür notwendige Konfiguration der Verkaufseinrichtungen kann dann auch automatisiert von der zentralen Datenbank mittels entsprechender Systemmeldungen durchgeführt werden.

Ferner weist die zentrale Datenbank bei dem erfindungsgemäßen System ein Abrechnungsmodul auf, das jeden Verkauf eines Codeworts protokolliert und einem bestimmten Prepaid-Produkt der jeweiligen Verkaufseinrichtung zuordnet. Auf diese Weise kann die Abrechnung der verkauften Produkte zentral von der Datenbank für jedes Prepaid-Produkt und für jeden Einzelhändler vollautomatisch durchgeführt werden.

Weitere Ziele, Merkmale und vorteilhafte Ausgestaltungen des erfindungsgemäßen Systems, die alle Teil der Erfindung sind, ergeben sich auch aus der nachfolgenden Beschreibung eines Ausführungsbeispiels und der Zeichnung.

Es zeigen:
- Fig. 1: eine Gesamtübersicht des erfindungsgemäßen Systems zum Verkauf von Prepaid-Produkten;
- Fig. 2: ein Ablaufdiagramm für die Anlieferung von Nummerncodes in die zentrale Datenbank des erfindungsgemäßen Systems;
- Fig. 3: einen typischen Kommunikationsverlauf zwischen der zentralen Datenbank und einer Verkaufseinrichtung des erfindungsgemäßen Systems und

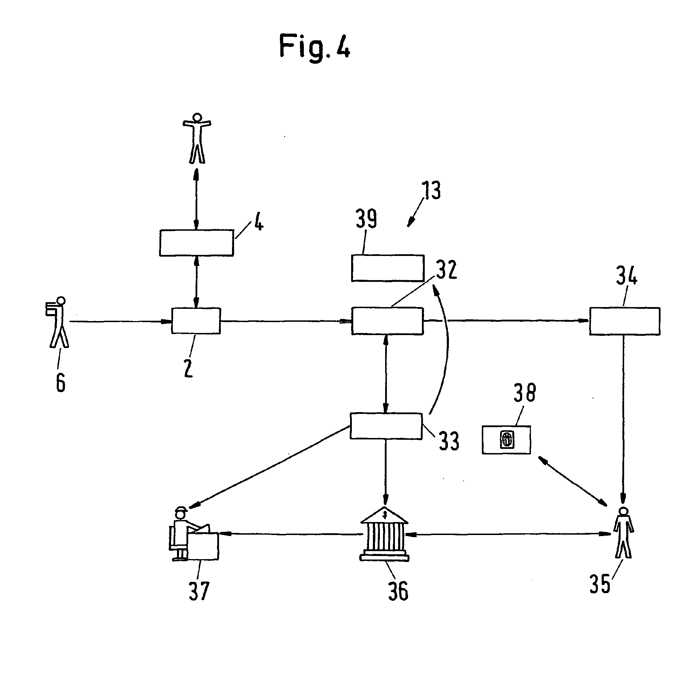

- Fig. 4: eine Übersicht über das erfindungsgemäße Abrechnungsverfahren.

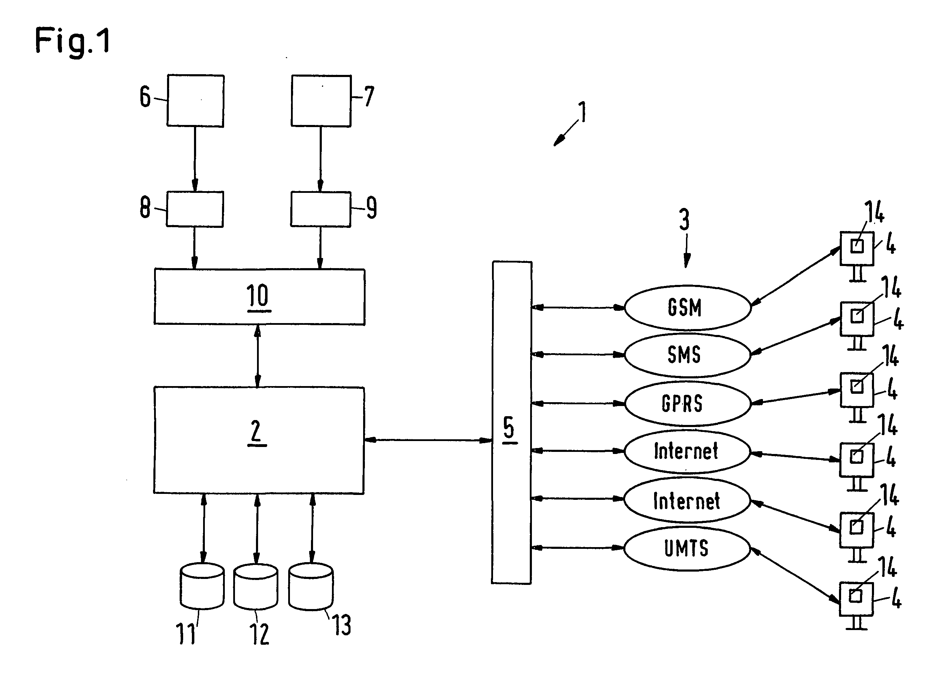

Die in Fig. 1 dargestellte Gesamtübersicht zeigt ein System 1 zum Verkauf von Nummerncodes für das Aufladen von Prepaid-Mobiltelefon. Das erfindungsgemäße System ist jedoch nicht auf diese Produktart beschränkt, sondern kann bei allen denkbaren Prepaid-Produkten angewendet werden, die an Endkunden verkauft und zentral abgerechnet werden können. Dies sind z.B. Prepaid-TV, Prepaid-Strom, Versicherungen (wie Reise- oder Gepäckversicherungen), Kino- und Konzerttickets, Eintrittskarten, Informationen jeglicher Art, Verkauf von Handylogos und Klingeltönen und dgl. Insbesondere können mit dem beschriebenen System 1 auch alle Produkte gleichzeitig angeboten und verkauft werden.

Herzstück des Systems 1 ist die zentrale Datenbank 2, in der verschiedene Codewörter als Nummerncodes oder dgl. gespeichert sind. Jeder einzelne Nummerncode entspricht dabei einem ganz konkreten Produkt. Dies ist im vorliegenden Beispiel ein Gesprächsguthaben einer bestimmten Höhe von einem Netzanbieter. Über Telekommunikationsverbindungen 3 ist die zentrale Datenbank 2 mit Verkaufseinrichtungen 4 im In- und Ausland verbindbar. Je nach Verkaufseinrichtung 4 kann eine Telekommunikationsverbindung 3 entweder eine GSM, SMS, GPRS, Internet, UMTS oder dgl. Verbindung sein. Zur Auswahl der geeigneten Telekommunikationsverbindung 3 zu der jeweiligen Verkaufseinrichtung 4 greift die zentrale Datenbank auf ein Kommunikationsmodul 5 zu, das die in der zentralen Datenbank 2 gespeicherten Nummerncodes zur Übertragung an die jeweilige Verkaufseinrichtung 4 und für die ausgewählte Telekommunikationsverbindung 3 in ein geeignetes Datenformat konvertiert. Umgekehrt erhält es Rückmeldungen von den Verkaufseinrichtungen 4, die in ein von der zentralen Datenbank lesbares Datenformat zurückkonvertiert werden. Dabei geschieht die Übertragung zu und von den Verkaufseinrichtungen 4 mit einer geeigneten Verschlüsselung.

Den Bestand an Nummerncodes erhält die zentrale Datenbank 2 sowohl von inländischen Lieferanten 6 als auch von ausländischen Lieferanten 7, die ihre Prepaid-Codes zu der zentralen Datenbank übertragen. Da die Nummerncodes der verschiedenen Lieferanten 6, 7 in verschiedenen Datenformaten vorliegen, sind den jeweiligen Lieferanten 6, 7 zugeordnete Einspeiseeinrichtungen 8, 9 vorgesehen, die eine automatisierte elektronische Feedeinspeisung der verschiedenen Nummerncodes ermöglichen. Die auf diese Weise elektronisch übermittelten Daten werden in einer Vor-Formatiereinrichtung 10 in ein einheitliches Systemformat konvertiert und mit einem Systemschlüssel verschlüsselt. Als verschlüsselte Nummerncodes werden diese Daten in der zentralen Datenbank 2 abgelegt, die internationale Bestände 11 und nationale Bestände 12 aufweist. Diese sind bspw. durch eine systemeinheitliche Provider- bzw. Lieferantenkennung unterscheidbar. Ferner weist die zentrale Datenbank 2 ein Abrechnungsmodul 13 auf, in dem sämtliche Verkäufe protokolliert werden, so dass aus den vorliegenden Verkaufszahlen automatisch Abrechnungen erstellt werden können.

Für die Übertragung der Nummerncodes aus der zentralen Datenbank 2 in einen Datenspeicher einer Verkaufseinrichtung 4 werden die Nummerncodes zu Datenpaketen von bis zu fünf Nummerncodes zusammengefasst. Dort werden sie einzeln abgespeichert und stehen nach einer Entschlüsselung zum Verkauf zur Verfügung. Dazu wird ein Nummerncode durch die Verkaufseinrichtung 4 an den Kunden ausgegeben, indem sie ausgedruckt oder auf einer optischen Anzeige angezeigt wird. Sobald eine vorherbestimmbare Anzahl der fünf übermittelten Nummerncodes verkauft sind, meldet die Verkaufseinrichtung in einer Statusmeldung die Anzahl der verkauften Nummerncodes an die zentrale Datenbank 2 zurück. Diese ermittelt, dass der entsprechenden Verkaufseinrichtung 4 nun nur noch zwei Nummerncodes eines bestimmten Prepaid-Produktes zur Verfügung stehen. Um auch weiterhin einen reibungslosen Abverkauf der einzelnen Nummerncodes ohne Wartezeiten für den Kunden zu ermöglichen, bereitet sie ein weiteres Datenpaket von bspw. fünf Nummerncodes vor, verschlüsselt es, und lässt es durch das Kommunikationsmodul 5 über die Telekommunikationsverbindung 3 an die entsprechende Verkaufseinrichtung 4 übermitteln.

Die Vorteile dieses Systems sind mehrschichtig. Der Kunde kauft das Produkt bei der Verkaufseinrichtung 4 des Systems 1, weil es für ihn komfortabel ist, die Produkte sofort verfügbar zu haben. Für den Händler entfällt die Kartenbevorratung und somit die Kapitalbildung für die Waren. Ferner bietet das System 1 ihren Händlern und Einzelhändlern eine komplette Abrechnungsdienstleistung mit an. Da die Nummerncodes "Just-in-Time" zeitnah an jede Verkaufseinrichtung 4 im In- und Ausland automatisch elektronisch geliefert werden, entfällt für den Großhandel die Logistik der Materialbeschaffung. Außerdem passt sich das System 1 automatisch an unterschiedlich frequentierte Point-of-Sale-Standorte an und sorgt für eine optimale Verteilung der Nummerncodes. Dies reduziert die Bevorratung für den Groß- und Einzelhandel auf das notwendige Minimum, so dass er in der Lage ist, seinen Lieferverpflichtungen besser nachzukommen und aufgrund der einfachen und flexiblen Gestaltung ein wesentlich breiteres Prepaid-Produktportfolio anbieten zu können.

Nachfolgend werden einzelne Aspekte des erfindungsgemäßen Systems 1 detailliert beschrieben.

Die zentrale Datenbank 2 basiert auf einer ausfallsicheren Datenbank mit einer Bestandsdatenbank, einem Einkaufs/Verkaufsmodul und einem Abrechnungsmodul 13 als Hauptbestandteil. Die Bestandsdatenbank beinhaltet sämtliche für den Betrieb erforderlichen Datenbestände, u.a. Produktinformationen sowie die Kundendaten und die technischen Daten der Verkaufseinrichtungen 4. Im Abrechnungsmodul 13 sind u.a. die zur Abrechnung mit dem Kunden erforderlichen Provisionen und Rabattstrukturen hinterlegt. Außerdem weist es eine Schnittstelle zu externen Settlement-Systemen auf. Im Einkaufs/Verkaufsmodul sind die nationalen und internationalen Bestände 11, 12 der verfügbaren Prepaid-Nummerncodes verschlüsselt in elektronischer Form hinterlegt.

Die zentrale Datenbank 2 sendet die Nummerncodes automatisch an die als Verkaufseinrichtungen 4 dienenden Automaten und Kassensysteme, wenn sie erkennt, dass der Mindestbestand an verfügbaren Nummercodes in einer dieser Verkaufseinrichtungen 4 erreicht ist. Je nach Stand der Verarbeitung werden die Stati der Nummercodes in der zentralen Datenbank 2 dabei wie folgt geändert: verfügbar, an den Automaten gesendet, Erhalt vom Automaten bestätigt, verkauft, gesperrt.

Die Verkaufseinrichtungen 4 können herkömmliche Automatensysteme mit einem Papierdrucker sein, bspw. umgebaute Münzwechsler oder Zigarettenautomaten. Der Kunde kauft, indem er auf einem Menu sein Produkt auswählt und mit Münz- oder Papiergeld bezahlt. Die Codenummer wird dann auf einem Quittungsbeleg (Papierticket) ausgegeben und/oder auf einer Anzeige angezeigt. Ferner sind als Verkaufseinrichtungen 4 Kassensysteme in der Art von Pin-Terminals ohne Geldeingabe vorgesehen. In diesem Fall wählt der Kassierer eines Geschäfts das Produkt entsprechend dem Wunsch des Kunden auf dem Pin-Terminal aus. Bezahlt wird wie für sonstige handelsübliche Ware an der Kasse des Geschäfts. Dabei sind die Verkaufseinrichtungen 4 für die Benutzung in dem System 1 hergerichtet, indem ein Hardware-Adapter 14 in herkömmliche Kassen-, Terminal- und Automatensysteme integriert worden ist. Auf diesem Hardware-Adapter 14 befinden sich die Betriebsdaten der Verkaufseinrichtungen 4, die über die Telekommunikationsverbindungen 3 an die zentrale Datenbank 2 weitergeleitet werden. Zusätzlichen Sensoren (z.B. für Produktausgabe) oder andere spezifische Einrichtungen für die Nutzung des Systems 1 sind in den Verkaufseinrichtungen 4 nicht erforderlich, da die zentrale Datenbank 2 die Steuerung mittels eines Programms übernimmt. Dabei kann bspw. auch die Zeilensteuerung bei den Ausdrucken durch Befehle von der zentralen Datenbank übernommen werden.

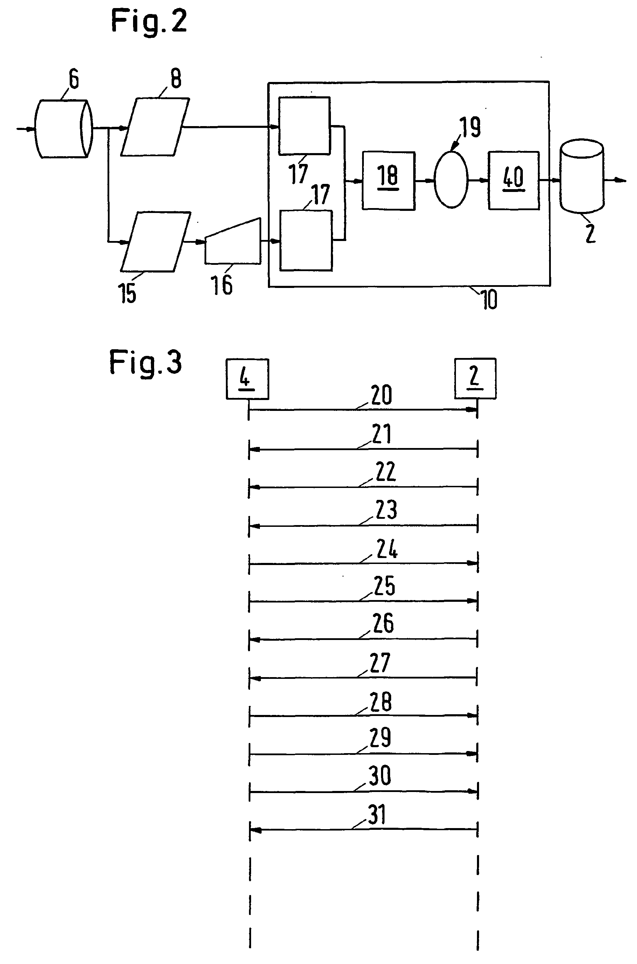

Bevor die Nummerncodes an die Verkaufseinrichtungen 4 übermittelt werden können, müssen sie in einem ersten Schritt des nachfolgend detailliert beschriebenen Arbeitsablaufs des Systems 1 in die zentrale Datenbank 2 aufgenommen werden. Die Datenanlieferung von einem Codewörter-Provider 6, insbesondere einem Mobilfunknetzbetreiber, ist in Fig. 2 dargestellt. Die Nummerncodes von einem Codewörter-Provider 6 werden, wenn möglich, in elektronischer Form an eine Einspeiseeinrichtung 8 übermittelt, die die Verschlüsselung und die digitale Signatur des Codewörter-Providers 6 erkennt und unterstützt. Für den Fall, dass der Codewörter-Provider eine elektronische Versorgung mit Nummerncodes nicht vorsieht, werden die Nummerncodes in herkömmlicher Weise auf einem Kartenträger 15 geliefert und in einer manuellen Erfassung 16 in elektronische Daten umgewandelt. Die elektronisch zur Verfügung stehenden Nummerncodes werden dann einem Vor-Formatierer 10 zugeführt, der die Daten in einem Verschlüsselungsmodul 17 mit einem asymmetrischen und/oder symmetrischen Verschlüsselungsverfahren verschlüsselt. Diesem verschlüsselten Nummerncode wird in dem Vor-Formatierer 10 eine einmalige Vorgangsnummer 18 zugeordnet, die nicht mehr gewechselt wird und als einzige Information frei lesbar ist. Daraufhin wird der Nummerncode in ein von der zentralen Datenbank 2 lesbares Datenformat 19 gebracht, das auf einem systemeinheitlichen Datenprotokoll basiert. In einem automatisch durchgeführten Ladeprozess 40 werden die verschlüsselten Nummerncodes mit der einmaligen Vorgangsnummer 18 und ggf. weiteren Kennungen, wie einer Produktkennung, einer Codewörter-Provider-Kennung oder dgl., in der zentralen Datenbank 2 gespeichert.

Die hohe Datensicherheit des Systems basiert darauf, dass die bereits verschlüsselt gespeicherten Nummerncodes nach Abruf durch eine Verkaufseinrichtung 4 durch das in Fig. 1 gezeigte Kommunikationsmodul 5 in einem symmetrischen Verfahren während der Versendung umgeschlüsselt werden. Eine Entschlüsselung wird erst durch die Verkaufseinrichtung 4 vorgenommen. Zusätzliche Sicherheit für die gesamte Kommunikation ist durch ein Messagebasiertes Datenprotokoll gewährleistet, über das jegliche Kommunikation von und zu den Verkaufseinrichtungen 4 am Point of Sale in verschlüsselter Form stattfindet. Dies gilt auch für die Übertragung einfacher Alarmierungen oder Benachrichtigungen bestimmter elektronischer Statusinformationen. Ferner ist in dem Datenprotokoll bei der Übertragung der Daten ein digitales Wasserzeichen enthalten.

Am Beispiel einer SMS-basierten Telekommunikationsverbindung 3 wird nun die in Fig. 3 dargestellte Kommunikation zwischen der zentralen Datenbank 2 und einer Verkaufseinrichtung 4 auf der Basis des verwendeten Datenprotokolls näher beschrieben. Dabei wird jede SMS verschlüsselt übertragen und mit einer Prüfsumme versehen.

Nach dem erstmaligen Einschalten der Betriebsspannung einer Verkaufseinrichtung 4 bootet das implementierte Computersystem und startet das Anwendungsprogramm. Dieses muss von der zentralen Datenbank 2 bestätigt werden, bevor es betriebsbereit ist. Dazu sendet die Verkaufseinrichtung 4 zunächst eine Powerup-SMS 20, mit der das Hochfahren des Computersystems angezeigt wird. Die Absenderkennung erfolgt dabei über die Telefonnummer. Eine eventuelle Sicherung wird über das IMEI des Modems oder ähnliches durchgeführt. Diese Powerup-SMS 20 erscheint nur, wenn der Rechner neu gebootet wurde und noch keine Daten enthält. Nach Empfang dieser Powerup-SMS 20 sendet die zentrale Datenbank 2 eine Init-SMS 21, in der der Verkaufseinrichtung 4 insbesondere Parameter wie Datum, Uhrzeit und Intervall für eine automatische Statusmeldung zugewiesen werden. Ferner werden eine Produkt-SMS 22 und eine Menu-SMS 23 übermittelt, mit der die Produkte und Benutzerführungsmenus konfiguriert werden. Die einzelnen Produkte werden in der Verkaufseinrichtung 4 über hierarchische Menus angewählt. Diese werden vollständig über SMS-Nachrichten aufgebaut. Es ist wichtig, immer das ganze Menu aufzubauen, da weitere SMS-Nachrichten nicht akzeptiert werden, falls das Menu unvollständig ist. Damit wird sichergestellt, dass die Verkaufseinrichtung 4 in einem voll funktionsfähigen Zustand ist. Möglicherweise müssen pro Menupunkt und/oder Produkt mehrere SMS-Nachrichten versendet werden. Dieser Vorgang ist nur nach einem Neuboot der Verkaufseinrichtung 4 oder bei einer Änderung von Produkten oder Menueinträgen nötig. Dabei enthält die Produkt-SMS 22 insbesondere die Produktkennzeichnung und die Definition des Ausdruckformates für dieses Produkt. Die Menu-SMS 23 enthält die Kennung und Beschriftung des Menupunktes, die Funktionen für die Menu-Bedienung wie Untermenus, Abbruch, Produktkauf, sowie eine Kennzeichnung von Untermenu bzw. Produkt. Der Empfang von Produkt-SMS 22 und Menu-SMS 23 wird durch Status-SMS 24 von der Verkaufseinrichtung 4 an die zentrale Datenbank 2 bestätigt.

Während des normalen Betriebs werden nach dem Verkauf eines Nummerncodes und bei Erreichen einer geforderten Anzahl von Verkäufen die verkauften Nummern sortiert nach dem Produkt in einer als Verkaufsmeldung dienenden Sell-SMS 25 an die zentrale Datenbank 2 gemeldet. Dabei enthält die Sell-SMS 25 eine Produktkennung, die Anzahl der verkauften Nummerncodes, die Anzahl der noch vorhandenen Nummerncodes sowie die eindeutige Vorgangsnummer 18 der verkauften Nummerncodes. Die zentrale Datenbank 2 bestätigt den Empfang einer Sell-SMS 25 mit einer Sell-Acknowledge-SMS 26, die die Produktkennung und den Status des Empfangs enthält. Bei Eingang der Sell-Acknowledge-SMS 26 werden die Nummerncodes in der Verkaufseinrichtung 4 endgültig gelöscht. Bleibt die Sell-Acknowledge-SMS 26 aus oder enthält sie eine fehlerhafte Statusmeldung, wird die Übertragung wiederholt.

Die Verkaufseinrichtung 4 hält intern einen Vorrat an Nummerncodes zu jedem Produkt. Diese Nummerncodes werden von der zentralen Datenbank 2 in Form einer Nummer-SMS 27 als Datenpaket mit fünf Nummerncodes an die Verkaufseinrichtung 4 gesendet. Produkte, deren Speicher in der Verkaufseinrichtung 4 leer ist, können vom Kunden nicht angewählt werden. Verkaufte Nummerncodes werden jeweils aus dem Speicher entfernt und in einer Verkaufshistorie in Verkaufseinrichtung 4 abgelegt. Die Nummerncodes werden stets in der Reihenfolge, in der sie empfangen wurden, verkauft. Eine Nummer-SMS 27 enthält dabei wiederum eine Produktkennung, die geforderte Anzahl verkaufter Nummerncodes für eine Sell-SMS 25, eine Löschkennung und das Datenpaket mit den fünf Nummerncodes. Sobald die geforderte Anzahl von drei Nummerncodes eines Produkts verkauft wurden, werden diese Nummerncodes sowie die Anzahl der noch verfügbaren Nummerncodes mit einer die Produktkennung, einen Status und die Anzahl der Nummerncodes in diesem Speicher enthaltenden Nummer-Acknowledge-SMS 28 an die zentrale Datenbank 2 gemeldet. Diese entscheidet daraufhin automatisch, ob ein neues Datenpaket mit fünf Nummerncodes zu diesem Point of Sale (Verkaufseinrichtung 4) gesendet wird.

Ferner sind Status-SMS 29 und Alarm-SMS 30 von der Verkaufseinrichtung 4 zu der zentralen Datenbank 2 vorgesehen, die entweder automatisch oder aufgrund einer Anfrage durch eine Poll-SMS 31 initiiert wird. Die Status-SMS 29 enthält bspw. den eingenommenen Betrag seit der letzten Türöffnung, den Türstatus sowie den Status aller Komponenten, insbesondere Füllstand der Nummerncodespeicher, Störmeldungen und dgl. Eine automatische Meldung ist insbesondere vorgesehen, wenn das Papier für den Drucker zum Ausdrucken der Nummerncodes ausgegangen ist, die Geldkassette voll ist, ein detektierbarer Stau im Geldkanal vorliegt, die Verkaufseinrichtung 4 geöffnet wurde; die Stromversorgung nach einem Stromausfall wiederkehrt oder eine Notstromversorgung aktiv ist.

Mit dem zuvor beschrieben Datenprotokoll ist die zentrale Datenbank 2 in der Lage, die benötigten Nummerncodes "Just-in-Time" an die entsprechenden Verkaufseinrichtungen 4 zu übertragen. Dabei wird die gesamte Verwaltung automatisch von der zentralen Datenbank 2 durchgeführt, die jederzeit über den Verkaufsstand der Prepaid-Nummerncodes in den beliebig, ggf. sogar weltweit verteilten Verkaufseinrichtungen 4 informiert ist. Die zentrale Datenbank 2 ist verantwortlich für die Zuteilung und Versendung der Nummerncodes an die Verkaufseinrichtungen 4. In den Verkaufseinrichtungen 4 selbst werden keine Produkte hinterlegt. Daher ist die zentrale Datenbank 2 Kernbestandteil des Systems 1 und kennt aufgrund des Daten- und Übertragungsprotokolls den aktuellen Stand der Produkte in allen Verkaufseinrichtungen 4 zu jeder Zeit.

Das beschriebene SMS-Nachrichtensystem war beispielhaft für die grundsätzlich verschlüsselte Kommunikation, die der höchsten Sicherheitsstufe entspricht. Das dargestellte Kommunikationsprotokoll kann auf allen paketorientierten Trägerdiensten, die drahtlos oder drahtgebunden arbeiten, verwendet werden. Das Just-in-Time-Protokoll- und Belieferungsverfahren arbeitet dabei auf Basis mehrfach verschlüsselter Datenpakete.

Da in der zentralen Datenbank 2 alle abrechnungsrelevanten Informationen vorliegen, weist diese das Abrechnungsmodul 13 auf, das erfindungsgemäß ein automatisiertes Abrechnungsverfahren durchführt. Dies ist nachfolgend anhand von Fig. 5 beschrieben. Alle Prepaid-Produkte, die über externe Verkaufseinrichtungen 4 verkauft werden, sind über das spezielle Datenprotokoll zu den Verkaufseinrichtungen 4 übertragen und deren Verkauf an die zentrale Datenbank 2 gemeldet worden. Dabei ist der Verkauf der Nummerncodes durch die eindeutige Vorgangsnummer 18 fest an die jeweiligen Verkaufseinrichtungen 4 gebunden. Die zentrale Datenbank 2 steuert die Verteilung der Nummerncodes bzw. Prepaid-Produkte an die Verkaufseinrichtungen 4 und kennt zu jedem Zeitpunkt deren aktuelle Produktbestände.

Voraussetzung für das Funktionieren des Abrechnungsverfahrens ist die dauerhafte Gewährleistung der Datenintegrität. Die über das System 1 verkauften Nummerncodes sind in ihrem Wert mit Bargeld vergleichbar. Die Anforderungen, die sich an das zentrale Abrechnungsmodul 13 und die Transaktionsverarbeitung stellen, sind diesbezüglich mit denen eines Handels- bzw. Abwicklungssystems einer Bank vergleichbar. Um die Datenintegrität der Verkaufsdaten zwischen dem externen Teil des Systems 1 und der zentralen Datenbank 2 stets zu gewährleisten, ist ein zeitlich abgestimmtes Verfahren einzuhalten, das die internen Kontrollabläufe und Prozesse des Systems 1 regelt.

Der erste Schritt betrifft die bereits beschriebene, vollständig automatisierte Nummerncodebearbeitung, durch die die Synchronisation innerhalb des Systems 1 zwischen der zentralen Datenbank 2 und den als Verkaufseinrichtungen 4 dienenden Automaten und Kassensystemen gewährleistet wird. In einem zweiten Schritt werden externe Berichte erstellt und den Betreibern 35 der Verkaufseinrichtungen zur Verfügung gestellt. Dabei beträgt die Abrechnungsperiode einen Monat. Innerhalb dieses Monats werden je nach Verkaufsanzahl eine Reihe von Bankabbuchungen getätigt, die von für eine Verkaufseinrichtung hinterlegten Limits abhängen können. Am Ende des Abrechnungsmonats werden alle bereits durchgeführten Bankabbuchungen in einer monatlichen Gesamtabrechnung zusammengefasst und der Abrechnungsmonat in einem Bericht abgeschlossen. Dafür wird jeder verkaufte Nummerncode von der zentralen Datenbank 2 einer in dem Abrechnungsmodul 13 geführten Rechnung 32 zugewiesen.

Zu einem bestimmten Zeitpunkt initiiert ein Trigger 33 das Abrechnungsverfahren, wonach die Rechnung 32 geschlossen wird, alle in der Rechnung 32 aufgeführten Posten einer Abrechnung 34 zugeordnet werden und eine neue Rechnung 39 geöffnet wird. Die Abrechnung 34 wird vorzugsweise im Monatsabstand automatisch erstellt und dem Betreiber 35 der jeweiligen Verkaufseinrichtung 4 zugesandt. Gleichzeitig wird von dem Trigger 33 eine Abbuchungsaufforderung an die Bank 36 des Betreibers 35 übermittelt, der in einem Abbuchungsauftrag sein Einverständnis mit der Überweisung gibt. In einem Buchhaltungssystem 37, das sowohl von dem Trigger 33 die Rechnungsstellung als auch von der Bank 36 die Überweisung des Rechnungsbetrages übermittelt bekommt, wird der tatsächliche Zahlungseingang abgeglichen.

Über ein Verkaufsinformationssystem 38, in das sich der Betreiber 35 bspw. über das Internet einwählen kann, wird zu jedem Zeitpunkt die Kontrolle über die aktuellen Verkäufe für die laufende Abrechnungsperiode sowie über die aktuelle Nummerncodebevorratung für jede Verkaufseinrichtung 4 ermöglicht. Weiterhin sind die Nummerncodeverkäufe der letzten drei Monate als Statistiken direkt verfügbar. Da das Abrechnungsmodul 13 mit in das Sicherheitskonzept der doppelten Verschlüsselung (Doppel-Tresor-System) und die speziellen Übertragungsprotokolle eingebunden ist, kann eine Manipulation des Abrechnungssystems von außen ausgeschlossen werden. Als weiterer Service kann die zentrale Datenbank 2 die in dem Abrechnungsmodul 13 erzeugten Informationen über das Kommunikationsmodul 5 als spezielle Verkaufsnachrichten in die Verkaufseinrichtung 4 übertragen, in der sie durch den Betreiber 35 abrufbar ist. Dabei können als Mengenangaben bspw. die Anzahl der verkauften Produkte, der Gesamtverkauf seit Aufstellung des Systems sowie die Verkäufe im vorigen und aktuellen Monat angezeigt werden. Damit kann der Betreiber 35 der Verkaufseinrichtung 4 jederzeit die aktuelle Entwicklung überblicken.

Mit dem vorliegenden System 1 zum Verkauf von Prepaid-Produkten wird die Kartenherstellung und damit verbunden die aufwändige Verteilung der Karten, auf die die Prepaid-Nummerncodes aufgedruckt sind, überflüssig. Dabei arbeitet das System 1 auf der Basis zeitnaher "Just-in-Time"-Datenübertragungen und läuft völlig automatisiert ab. Das speziell für den Verkauf von Prepaid-Produkten konzipierte System 1 ist ein netzzentrischer Dienst. Es besteht aus mehreren Modulen und unterschiedlichen Verkaufseinrichtungen 4 am Point of Sale, die für den Verkauf im Einzelhandel vorgesehen sind. Herzstück des gesamten Systems ist die zentrale Datenbank 2, die mit den Automaten, Kassenterminals und elektronischen Shops (vSHOP, E-Commerce, Internet) kommuniziert und diese rund um die Uhr mit elektronischen Produkten in Form von Nummerncodes oder dgl. Codewörter in verschlüsselter Form beliefert. Dieses System 1 ist äußerst flexibel, da eine unbegrenzte Anzahl verschiedener Prepaid-Produkte in einer einzigen Verkaufseinrichtung 4 vertrieben werden können. Dadurch kann die Produktvielfalt vergrößert und eine schnelle Anpassung an spezielle Kundenwünsche einfach und zentral durchgeführt werden. Im Gegensatz zur Direktaufladung bietet das System 1 eine für Kunden und Handel einfachere Lösung an.

### Bezugszeichenliste:

- 1: System
- 2: zentrale Datenbank
- 3: Telekommunikationsverbindungen
- 4: Verkaufseinrichtungen
- 5: Kommunikationsmodul
- 6: inländischer Codewörter-Provider
- 7: ausländischer Codewörter-Provider
- 8: Einspeiseeinrichtung
- 9: Einspeiseeinrichtung
- 10: Vor-Formatiereinrichtung
- 11: internationale Bestände
- 12: nationale Bestände
- 13: Abrechnungsmodul
- 14: Hardwareadapter
- 15: Kartenträger
- 16: manuelle Erfassung
- 17: Verschlüsselungsmodul
- 18: Vorgangsnummer
- 19: Datenformat
- 20: Powerup-SMS
- 21: Init-SMS
- 22: Produkt-SMS
- 23: Menu-SMS
- 24: Status-SMS
- 25: Sell-SMS
- 26: Sell-Acknowledge-SMS
- 27: Nummer-SMS
- 28: Nummer-Achnowledge-SMS
- 29: Status-SMS
- 30: Alarm-SMS
- 31: Poll-SMS
- 32: Rechnung
- 33: Trigger
- 34: Abrechnung
- 35: Betreiber
- 36: Bank
- 37: Buchhaltungssystem
- 38: Verkaufsinformationssystem
- 39: Rechnung
- 40: Ladeprozess

## Patentansprüche

1. System zum Verkauf von Prepaid-Produkten mit einer zentralen Datenbank (2) zur automatisierten Steuerung des Systems (1) und mindestens einer einen Datenspeicher aufweisenden Verkaufseinrichtung (4), die über eine Telekommunikationsverbindung (3) miteinander verbindbar sind, wobei die Prepaid-Produkte als Codewörter in der zentralen Datenbank (2) gespeichert sind und über die Telekommunikationsverbindung (3) in den Datenspeicher der Verkaufseinrichtung (4) übertragen werden, wobei die Verkaufseinrichtung (4) ein Codewort nach einem Verkauf an den Kunden ausgibt und nach einem oder mehreren Verkäufen die Anzahl der verkauften Codewörter an die zentrale Datenbank (2) zurückmeldet und wobei die zentrale Datenbank (2) die Anzahl der in der Verkaufseinrichtung (4) jeweils noch vorhandenen Codewörter überwacht und dieser bei Unterschreiten einer vorgebbaren Anzahl ein neues Datenpaket mit neuen Codewörtern überträgt, **dadurch gekennzeichnet, dass** die zentrale Datenbank (2) über eine Kommunikationsverbindung mit mindestens einem Codewörter-Provider (6, 7) verbindbar ist und eine an das Datenformat der Codewörter-Provider (6, 7) anpassbare Einspeiseeinrichtung (8, 9) zum Empfang der Codewörter aufweist, wobei die zentrale Datenbank (2) eine Vor-Formatiereinrichtung (10) aufweist, in der verschiedene Datenformate mehrerer Codewörter-Provider (6, 7) in ein einheitliches Systemformat konvertiert und verschlüsselt werden, und dass die Codewörter in der zentralen Datenbank (2) verschlüsselt abgelegt und die zu Datenpakten zusammengefassten Codewörter beim Versenden an die Verkaufseinrichtung (4) erneut verschlüsselt werden.

2. System nach Anspruch 1, **dadurch gekennzeichnet, dass** die zentrale Datenbank (2) ein Kommunikationsmodul (5) zur Kommunikation mit einer Verkaufseinrichtung (4) aufweist, wobei das Kommunikationsmodul (5) eine geeignete Telekommunikationsverbindung (3) zu der jeweiligen Verkaufseinrichtung (4) auswählt, zu übertragende Daten in ein für die jeweilige Verkaufseinrichtung (4) und/oder die ausgewählte Kommunikationsverbindung (3) geeignetes Datenformat konvertiert und zu empfangende Daten in ein für die zentrale Datenbank (2) geeignetes Datenformat zurückkonvertiert.

3. System nach Anspruch 1 oder 2, **dadurch gekennzeichnet, dass** in einer Verkaufseinrichtung (4) ein Hardware-Adapter (14) zur Kommunikation mit der zentralen Datenbank (2) und zur Speicherung und Verarbeitung der Codewörter vorgesehen ist.

4. System nach einem der vorhergehenden Ansprüche, **dadurch gekennzeichnet, dass** der Codewörter-Provider (6, 7) die Codewörter verschlüsselt und/oder mit einer digitalen Signatur an die zentrale Datenbank (2) überträgt.

5. System nach einem der vorhergehenden Ansprüche, **dadurch gekennzeichnet, dass** die Verschlüsselung sowohl auf asymmetrischen als auch auf symmetrischen Verschlüsselungsverfahren basiert.

6. System nach einem der vorhergehenden Ansprüche, **dadurch gekennzeichnet, dass** für die Übertragung von Daten für verschiedene Prepaid-Produkte sowie von und zu verschiedenen Verkaufseinrichtungen (4) ein einheitliches Datenübertragungsprotokoll verwendet wird, das zumindest eine Kennung für die Verkaufseinrichtung (4) und eine einem Codewort zugeordnete eindeutige Vorgangskennung (18) aufweist.

7. System nach einem der vorhergehenden Ansprüche, **dadurch gekennzeichnet, dass** die zentrale Datenbank (2) ein Abrechnungsmodul (13) aufweist, das jeden Verkauf eines Codeworts protokolliert und einem bestimmten Prepaid-Produkt der jeweiligen Verkaufseinrichtung (4) zuordnet.

## Claims

1. A vending system for prepaid products, comprising a central data base (2) for the automated control of the system (1) and at least one vending device (4) comprising a data memory, which can be connected to each other via a telecommunication link (3), wherein the prepaid products are stored as code words in the central data base (2) and are transmitted to the data memory of the vending device (4) via the telecommunication link (3), wherein the vending device (4) outputs a code word to the customer after a sale and after one or more sales notifies the number of sold code words to the central data base (2) and wherein the central data base (2) monitors the number of code words still available in the vending device (4) and transmits a new data package with new code words when the number of code words falls below a predetermined value,
**characterised in that** the central data base (2) can be connected to at least one code word provider (6, 7) via a communication link and comprises a feed device (8, 9) that can be adapted to the data format of the code word providers (6, 7) for receiving the code words, wherein the central data base (2) comprises a pre-formatting device (10) in which various data formats of several code word providers (6, 7) are converted and encrypted into a uniform system format,
and **in that** the code words are deposited in encrypted form in the central data base (2) and the code words combined to form data packets are again encrypted when sent to the vending device (4).

2. A system according to Claim 1,
**characterised in that** the central data base (2) comprises a communication module (5) for communicating with a vending device (4), wherein the communication module (5) selects a suitable telecommunication link (3) to the respective vending device (4), converts data to be transmitted into a data format that is suitable for the respective vending device (4) and/or the selected communication link (3) and converts data to be received back into a data format suitable for the central data base (2).

3. A system according to Claim 1 or 2,
**characterised in that** a hardware adapter (14) for communication with the central data base (2) and for storing and processing the code words is provided in a vending device (4).

4. A system according to one of the preceding Claims,
**characterised in that** the code word provider (6, 7) encrypts the code words and/or transmits them with a digital signature to the central data base (2).

5. A system according to one of the preceding Claims,
**characterised in that** the encryption is based on asymmetric and also on symmetric encryption methods.

6. A system according to one of the preceding Claims,
**characterised in that** for the transmission of data for various prepaid products from and to various vending devices (4) a uniform data transmission protocol is used, which comprises at least one identification for the vending device (4) and a unique transaction identification (18) assigned to a code word.

7. A system according to one of the preceding Claims,
**characterised in that** the central data base (2) comprises an accounting module (13) which logs each sale of a code word and assigns a specific pre-paid product to the respective vending device (4).

## Revendications

1. Système pour la vente de produits prépayés avec une banque de données centrale (2) pour la commande automatisée du système (1) et au moins un dispositif de vente (4) muni d'une mémoire de données qui peuvent être mis en communication par l'intermédiaire d'une liaison dé télécommunication (3), les produits prépayés étant mémorisés dans la banque de données centrale (2) sous la forme de mots de code et pouvant être transmis via la liaison de télécommunication (3) dans la mémoire de données du dispositif de vente (4), le dispositif de vente (4) émettant un mot de code après une vente à la clientèle et signalant à la banque de données centrale, après une ou plusieurs ventes, le nombre des mots de code vendus, la banque de données (2) surveillant le nombre de mots de code encore disponibles dans le dispositif de vente (4) et transmettant à celui-ci un nouveau paquet de données avec des nouveaux mots de code en cas de dépassement d'un nombre pouvant être indiqué, **caractérisé en ce que** la banque de données centrale (2) peut être mise en communication par l'intermédiaire d'une liaison de télécommunication avec au moins une fournisseur de mots de code (6, 7) et elle est munie d'un dispositif d'alimentation (8, 9) pouvant être adapté au format de données du fournisseur de mots de code (6, 7), la banque de données centrale (2) étant munie d'un dispositif de formatage initial (10) dans lequel différents formats de données de différents fournisseurs de mots de code (6, 7) sont convertis dans un format de système uniforme et codés, et **en ce que** les mots de code sont rangés en mémoire dans la banque de données centrale (2) sous forme codée et les mots de code réunis en paquets de données sont à nouveau décodés lors de l'envoi au dispositif de vente (4).

2. Système selon la revendication 1, **caractérisé en ce que** la banque de données centrale (2) est munie d'un module de communication (5) pour communiquer avec un dispositif de vente (4), le module de communication (5) sélectionnant une liaison de télécommunication (3) adaptée vers le dispositif de vente (4) respectif pour convertir les données à transmettre dans un format de données adapté au dispositif de vente respectif (4) et/ou à la liaison de communication (3) choisie et reconvertit les données reçues dans un format de données adapté à la banque de données centrale (2).

3. Système selon la revendication 1 ou 2, **caractérisé en ce qu'**il est prévu dans un dispositif de vente (4) un adaptateur hardware (14) pour la communication avec la banque de données centrale (2) et pour enregistrer et traiter les mots de code.

4. Système selon l'une des revendications précédentes, **caractérisé en ce que** le fournisseur de mots de code (6, 7) crypte les mots de code et/ou les transmet à la banque de données centrale (2) avec une signature électronique.

5. Système selon l'une des revendications précédentes, **caractérisé en ce que** le cryptage est basé aussi bien sur des procédés symétriques que sur des procédés asymétriques.

6. Système selon l'une des revendications précédentes, **caractérisé en ce qu'**il est utilisé pour la transmission de données pour différents produits prépayés ainsi que de et vers différents dispositifs de vente (4) un protocole de transfert de données uniforme qui présente au moins un identifiant pour le dispositif de vente (4) et un identifiant de procédure univoque associé à un mot de code.

7. Système selon l'une des revendications précédentes, **caractérisé en ce que** la banque de données centrale (2) est munie d'un module de décompte (13) qui consigne chaque vente d'un mot de code et associe un produit prépayé particulier au dispositif de vente (4) respectif.
